(19) **Europäisches Patentamt / European Patent Office / Office européen des brevets**

(11) **EP 1 217 263 B1**

(12) **FASCICULE DE BREVET EUROPEEN**

(45) Date de publication et mention
de la délivrance du brevet:
**13.02.2008 Bulletin 2008/07**

(51) Int Cl.:
**F16H 59/04** *(2006.01)*

(21) Numéro de dépôt: **01403008.4**

(22) Date de dépôt: **23.11.2001**

(54) **Procédé de gestion d'un calculateur d'une boîte de vitesses**

Methode für das Verwalten eines Getrieberechners

Method for managing a transmission computer

(84) Etats contractants désignés:
**AT BE CH CY DE DK ES FI FR GB GR IE IT LI LU MC NL PT SE TR**

(30) Priorité: **19.12.2000 FR 0016559**

(43) Date de publication de la demande:
**26.06.2002 Bulletin 2002/26**

(73) Titulaire: **RENAULT S.A.S.**
**92100 Boulogne Billancourt (FR)**

(72) Inventeurs:
• **Pouyau, Laurent**
**92290 Chantenay Malabry (FR)**
• **Rivoiron, Sylvain**
**95320 Saint Leu La Foret (FR)**

(56) Documents cités:
**DE-A- 3 836 145**　　　　**DE-A- 19 707 141**
**US-A- 5 660 079**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un procédé de gestion d'un calculateur d'une boîte de vitesses de véhicule automobile à commande dite robotisée.

L'invention concerne plus particulièrement un procédé de gestion d'un calculateur d'une boîte de vitesses de véhicule automobile à commande dite robotisée qui comporte des actionneurs commandés en réponse à l'actionnement d'un levier de changement des rapports de la dite boîte, ledit levier étant mobile suivant au moins deux directions sensiblement perpendiculaires de sélection et d'engagement des rapports, du type qui comporte au moins, en début de vie du véhicule, une étape initiale d'apprentissage des positions du levier au cours de laquelle le calculateur mémorise, pour chaque rapport, une information représentative de la position du levier lors du passage du rapport, qui est fournie par des moyens de détection et qui est exprimée dans un repère associé aux deux directions de sélection et d'engagement, pour définir une zone de reconnaissance initiale dudit rapport qui correspond à une fenêtre rectangulaire dont la position dans le repère est dépendante de celle du levier et dont les dimensions sont délimitées par un intervalle prédéterminé de positions que le levier est susceptible d'occuper selon les directions de sélection et d'engagement au cours des passages dudit rapport.

On connaît de nombreux exemples de boîtes de vitesses commandées par un calculateur géré par un procédé de ce type.

Dans la plupart des cas, il s'agit de boîtes de vitesses pour lesquelles le levier de commande des changements des rapports est mobile suivant une grille dite "en H", c'est à dire suivant une direction transversale de sélection des rapports et suivant au moins une direction longitudinale d'engagement des rapports.

Dans un telle boîte, la détection du passage d'un rapport, c'est à dire la détection de la position finale du levier après qu'il ait parcouru ses courses de sélection puis d'engagement, est assurée par des moyens de détection qui sont généralement constitués par des capteurs de déplacement liés au levier ou à la grille et qui transmettent une information de sélection et une information d'engagement au calculateur de la boîte .

Ces capteurs sont généralement au nombre de deux, l'un pour l'information de sélection, l'autre pour l'information d'engagement.

Afin d'optimiser la précision du pilotage de la boîte, le calculateur doit recevoir à tout moment une information représentative de la position réelle du levier, c'est à dire une information qui permet de déterminer si il est au point mort, en début de passage du rapport, ou en fin de passage du rapport.

Il est connu de proposer un calculateur géré par un procédé comportant au moins une étape initiale d'apprentissage.

Cette étape apprentissage intervient par exemple en début de vie du véhicule et elle a pour but de permettre au calculateur, indépendamment des dispersions dimensionnelles des organes internes de la boîte, de délimiter des zones de reconnaissance associées au passage de chaque rapport en vue d'assurer ultérieurement en fonctionnement une reconnaissance des rapports de la boîte.

Le document DE-A-3.836.145 décrit et représente un procédé de gestion d'un calculateur d'une boite de vitesses robotisée selon le préambule de la revendication 1.

De manière connue, les zones de reconnaissance associées à chaque rapport de la boîte correspondent à des fenêtres qui sont largement dimensionnées, de manière à permettre une reconnaissance satisfaisante du rapport qui a été sélectionné, puis engagé, même lorsque les organes mécaniques internes de la boîte s'usent, et notamment le levier et les capteurs. En particulier, ces fenêtres sont d'un ordre de grandeur proche de la plage totale de détection des capteurs de déplacement du levier.

Cette conception présente l'inconvénient d'induire une durée élevée de la reconnaissance de chaque rapport, puisque la durée de reconnaissance est liée à la taille de la fenêtre et à la capacité de calcul du microprocesseur dont est pourvu le calculateur.

Pour remédier à cet inconvénient, l'invention propose un procédé du type décrit précédemment, dans lequel les fenêtres sont réactualisées périodiquement et sont de taille réduite.

Dans ce but, l'invention propose un procédé du type décrit précédemment, caractérisé en ce qu'il comporte au moins une étape supplémentaire d'apprentissage des positions du levier, qui est déclenchée par la détection d'au moins un critère déterminé, au cours de laquelle le calculateur mémorise à nouveau, pour chaque rapport, une information représentative d'une nouvelle position du levier pour définir une nouvelle zone de reconnaissance dudit rapport qui correspond à une fenêtre dont la nouvelle position dans le repère est dépendante de la nouvelle position du levier.

Selon d'autres caractéristiques de l'invention :

- le procédé comporte plusieurs étapes supplémentaires d'apprentissage de la position du levier,
- le critère déterminé qui déclenche chaque nouvelle étape d'apprentissage correspond à un écart déterminé, mesuré par les moyens de détection au cours des passages d'un rapport, de la position du levier dans les deux directions,
- l'écart déterminé correspond à une fraction déterminée de la plage totale de détection des positions du levier qui est couverte par les moyens de détection,
- la fraction déterminée est établie en fonction de paramètres d'usure de la boîte de vitesses,
- la fraction déterminée correspond à environ un millième de la plage totale de détection des positions du levier qui est couverte par les moyens de détection,

- la fenêtre associée à chaque zone de reconnaissance du passage d'un rapport est centrée sur la position du levier détectée lors de la dernière étape d'apprentissage effectuée,
- la fenêtre associée à chaque zone de reconnaissance est de dimensions réduites et les fenêtres sont toutes de mêmes dimensions prédéterminées,
- les dimensions des fenêtres correspondent à une fraction déterminée de la dimension d'une fenêtre totale couvrant la totalité des positions que sont susceptibles de couvrir les moyens de détection, pour proposer une reconnaissance précise et rapide de la position du levier.

D'autres caractéristiques et avantages de l'invention apparaîtront à la lecture de la description détaillée qui suit pour la compréhension de laquelle on se reportera aux dessins annexés dans lesquels :

- la figure 1 est une vue schématique d'une grille des rapports d'une boîte de vitesse robotisée commandée par un calculateur fonctionnant suivant un procédé de gestion conforme à l'état de la technique,
- la figure 2 est une vue schématique comparative de détail illustrant une zone de reconnaissance d'un procédé conforme à l'état de la technique et des zones de reconnaissance d'un procédé conforme à l'invention.

Dans la description qui va suivre, des chiffres de référence identiques désignent des pièces identiques ou ayant des fonctions similaires.

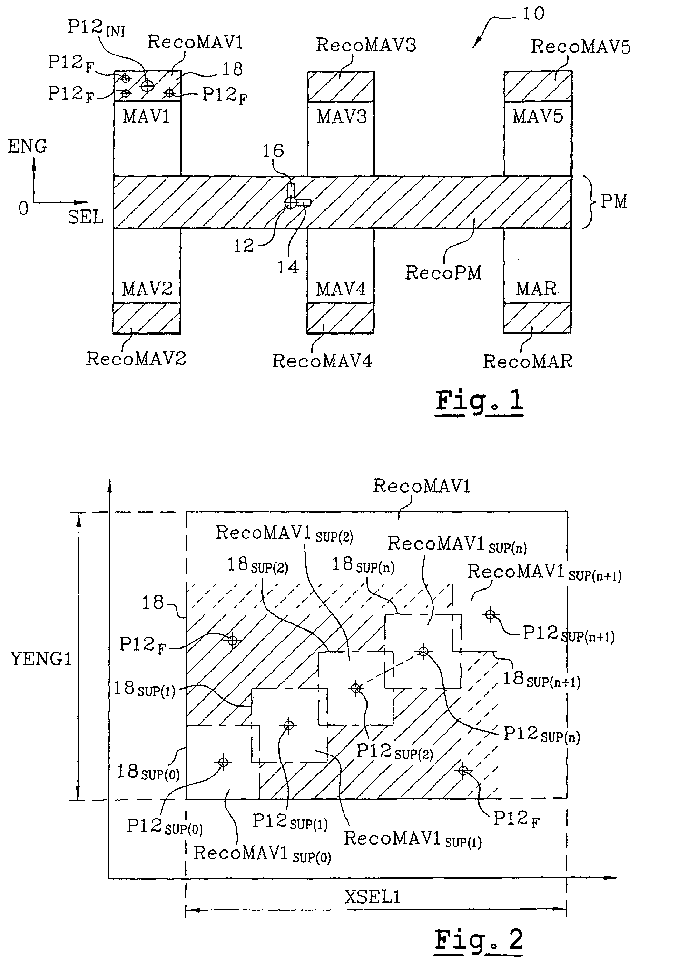

On a représenté à la figure 1 une grille 10 d'une boîte de vitesses (non représentée) de véhicule automobile à commande dite robotisée.

De manière connue, la boîte comporte un calculateur (non représenté) qui est susceptible de commander des actionneurs (non représentés) en réponse à l'actionnement d'un levier (non représenté) de changement des rapports de la dite boîte.

Plus particulièrement, la grille 10 qui a été représentée à la figure 1 correspond à une boîte comportant une ligne de point mort "PM4, cinq rapports "MAV1", "MAV2", "MAV3", "MAV4", "MAV5" d e marche avant, et un rapport "MAR" de marche arrière. Il sera compris que le nombre de ces rapports et leur emplacement sur la grille 10 n'est aucunement limitatif de l'invention.

Le levier, et plus particulièrement une extrémité 12 de celui-ci, est mobile dans la grille 10 suivant au moins deux directions sensiblement perpendiculaires "SEL" de sélection et "ENG" d'engagement des rapports de la boîte.

De manière connue, le calculateur de la boîte fonctionne suivant un procédé de gestion qui comporte au moins, en début de vie du véhicule, une étape initiale d'apprentissage des positions du levier au cours de laquelle le calculateur mémorise, pour chaque rapport, une information représentative de la position du levier lors du passage du rapport.

Cette information est fournie par des moyens de détection 14 et 16, qui sont de préférence liés au levier. Les moyens de détection 14 et 16 sont par exemple constitués d'un capteur 14 de déplacement dans la direction "SEL" de sélection, notamment transversale, et d'un capteur 16 de déplacement dans la direction "ENG" d'engagement, notamment longitudinale.

L'information peut par exemple consister en un couple de coordonnées cartésiennes relatives à la position de l'extrémité 12 du levier qui est exprimée dans un repère "O, ENG, SEL" d'origine O prédéterminée et associé aux deux directions "SEL" de sélection et "ENG" d'engagement, pour définir une zone de reconnaissance initiale associée à chaque rapport.

Ainsi, comme l'illustre la figure 1, l'étape initiale d'apprentissage des positions du levier consiste à définir une zone de reconnaissance "RecoPM" associée à la ligne de point port "PM", une zone de reconnaissance "RecoMAV1" associée au premier rapport "MAV1" de marche avant, une zone de reconnaissance "RecoMAV2" associée au deuxième rapport "MAV2" de marche avant, une zone de reconnaissance "RecoMAV3" associée au troisième rapport "MAV3" de marche avant, une zone de reconnaissance "RecoMAV4" associée au quatrième rapport "MAV4" de marche avant, une zone de reconnaissance "RecoMAV5" associée au cinquième rapport "MAV5" de marche avant, et une zone de reconnaissance "RecoMAR" associée au rapport "MAR" de marche arrière.

L'invention peut s'appliquer à une boîte à rapports discrets en nombre supérieur ou égal à cinq.

Dans la suite de la présente description, on s'attachera à une zone en particulier, par exemple la zone de reconnaissance "RecoMAV1" associée au premier rapport "MAV1" de marche avant, étant entendu que les zones de reconnaissance des autres rapports et de la ligne de point mort sont sensiblement analogues.

De manière connue, la zone de reconnaissance "RecoMAV1" correspond à une fenêtre 18 rectangulaire dont la position dans le repère "O, ENG, SEL" dépend de la position $P12_{INI}$ de l'extrémité 12 levier établie lors l'étape initiale d'apprentissage des positions du levier.

Les dimensions de la fenêtre 18 suivant les directions "SEL" de sélection et "ENG" d'engagement sont délimitées par un intervalle prédéterminé de positions $P12_F$ que le levier est susceptible d'occuper en fonctionnement au cours des passages du premier rapport "MAV1" de marche avant.

Conformément à l'invention, le procédé comporte au moins une étape supplémentaire d'apprentissage des positions du levier associées à chaque rapport, qui est déclenchée par la détection d'au moins un critère déterminé, au cours de laquelle le calculateur mémorise à nouveau, pour chaque rapport, une information représentative d'une nouvelle position $P12_{SUP}$ de l'extrémité 12 du levier pour définir une nouvelle zone RecoMAV1$_{SUP}$ de reconnaissance du rapport qui correspond à une fenêtre 18$_{SUP}$ dont la nouvelle position dans le repère "O, ENG, SEL" est dépendante de la nouvelle position P12$_{SUP}$ de l'extrémité 12 du levier.

Avantageusement, le procédé peut comporter plusieurs étapes supplémentaires d'apprentissage de la position du levier, et de ce fait le calculateur mémorise à chaque étape d'ordre "n", une information représentative d'une nouvelle position P12$_{SUP(n)}$ de l'extrémité 12 du levier pour définir une nouvelle zone RecoMAV1$_{SUP(n)}$ de reconnaissance du rapport qui correspond à une fenêtre 18$_{SUP(n)}$ dont la nouvelle position dans le repère "O, ENG, SEL" est dépendante de la nouvelle position P12$_{SUP(n)}$ de l'extrémité 12 du levier.

Le procédé consiste ainsi en une succession d'étapes d'apprentissage semblables à l'étape d'apprentissage initiale, mais au cours desquelles les informations représentatives de la position du levier et les tailles des fenêtres associées aux zones de reconnaissance sont établies de manière plus précise comme on le verra ultérieurement.

Cette configuration est représentée plus particulièrement à la figure 2.

On a représenté à la figure 2, à titre de comparaison la zone de reconnaissance RecoMAV1 associée à la fenêtre 18 associée à la position de l'extrémité 12 du levier obtenue à l'issue de l'étape d'apprentissage initial réalisée conformément à l'état antérieur de la technique. La position P12$_{INI}$ de l'extrémité 12 du levier qui a été décrite à la figure 1 n'est pas reproduite ici, car la fenêtre 18 n'est pas représentée dans son intégralité. On a aussi représenté des nouvelle zones RecoMAV1$_{SUP(n)}$ de reconnaissance du rapport réalisées selon le procédé objet de l'invention, n étant un entier croissant à partir de la valeur nulle O qui associée à l'étape initiale d'apprentissage selon le procédé.

Chaque zone RecoMAV1$_{SUP(n)}$ de reconnaissance du premier rapport correspond à une fenêtre 18$_{SUP(n)}$ dont la nouvelle position dans le repère "O, ENG, SEL" est dépendante de la nouvelle position P12$_{SUP(n)}$ de l'extrémité 12 du levier.

Ainsi, à la différence du procédé connu de l'état antérieur de la technique, le procédé déclenche plusieurs fois l'étape d'apprentissage au cours de la vie de la boîte de vitesses.

Bien entendu, une configuration similaire est envisagée pour la reconnaissance de chacun des rapports de la boîte et pour la reconnaissance de la ligne de point mort "PM".

Le critère déterminé qui déclenche chaque nouvelle étape d'apprentissage correspond à un écart déterminé, ou "dérive", mesuré par les moyens de détection 14, 16 au cours des passages du premier rapport, de la position P12 de l'extrémité 12 du levier dans les deux directions "SEL" et "ENG" lorsque le premier rapport est engagé.

Plus particulièrement, dans le cas présentement décrit, le calculateur est susceptible, lors de chaque engagement du premier rapport de marche avant, de comparer une valeur de la position P12$_F$ de fonctionnement du levier à la dernière valeur de la position P12$_{sup(n)}$ prise comme référence de la zone de reconnaissance RecoMAV1$_{sup(n)}$ du levier, lors du précédent engagement du premier rapport de marche avant, et de déclencher, si l'écart de position est supérieur à l'écart déterminé, une nouvelle étape d'apprentissage. La valeur de la position P12$_F$ du levier en fonctionnement est alors mémorisée comme la valeur de la nouvelle position P12$_{sup(n+1)}$ prise comme référence de la nouvelle zone de reconnaissance RecoMAV1$_{sup(n+1)}$ du levier.

Le choix de la valeur de l'écart dépend donc du mode d'expression de la position P12$_F$ de l'extrémité du levier.

Dans le cas où la position P12$_F$ de l'extrémité du levier est exprimée en coordonnées cartésiennes, l'écart déterminé peut correspondre à un vecteur d'écart, exprimé lui aussi en coordonnées cartésiennes, dont les composantes peuvent être choisies égales ou non, selon que l'on considère que les dérives suivant les directions "SEL et "ENG" doivent être égales. L'écart déterminé peut aussi être une norme du vecteur d'écart précité, ou de manière non limitative de l'invention, toute fonction "f" de combinaison des écarts des coordonnées de la positon P12$_F$ du levier.

Dans le mode de réalisation préféré de l'invention, l'écart déterminé correspond à une fraction déterminée de la plage totale de détection des positions P12$_F$ du levier qui est couverte par les moyens 14, 16 de détection, la plage totale de détection des positions P12$_F$ du levier correspondant notamment à l'ensemble des positions P12$_F$ qui pouvaient être détectées par le procédé selon l'état antérieur de la technique, c'est à dire l'ensemble des positions P12$_F$ contenues dans la zone de reconnaissance RecoMAV1.

En d'autres termes, si, par exemple les moyens de détection couvrent une plage XSEL1 de coordonnées des positions P12$_F$ suivant la direction "SEL" et une plage YENG2 de coordonnées des positions P12 suivant la direction "ENG", l'écart "Δ" admis pour le déclenchement de l'étape suivante d'apprentissage peut par exemple correspondre à une fraction "α" de la fonction "f" de combinaison des coordonnées de la plage des positions P12$_F$ couverte par les moyens 14, 16 de détection :

$$\Delta = \alpha \times f(XSEL1, YENG1)$$

Dans le mode de réalisation préféré de l'invention, la fraction "α" déterminée est établie en fonction de paramètres d'usure de la boîte de vitesses. L'usure se produisant lentement, la valeur de la fraction "α" déterminée correspond à environ un millième de la plage totale de détection des positions P12$_F$ du levier qui est couverte par les moyens de détection 14, 16 :

$$\Delta = f(XSEL1, YENG1)/1000$$

Par ailleurs, comme l'illustre la figure 2, dans le mode de réalisation préféré de l'invention, la fenêtre $18_{sup(n)}$ associée à chaque zone RecoMAV1$_{sup(n)}$ de reconnaissance du passage du rapport est centrée sur la position P12$_{sup(n)}$ du levier détectée lors de la dernière étape d'apprentissage effectuée. Cette configuration n'est pas limitative de l'invention, et le fenêtre $18_{sup(n)}$ pourrait occuper tout autre position définie par rapport à la position P12$_{sup(n)}$ du levier détectée lors de la dernière étape d'apprentissage effectuée.

Avantageusement, le procédé permet, en renouvelant fréquemment la zone de reconnaissance RecoMAV1$_{sup(n)}$ que la fenêtre $18_{sup(n)}$ associée à ladite zone de reconnaissance RecoMAV1$_{sup(n)}$ soit choisie comme étant de dimensions plus réduites que la fenêtre 18 du procédé connu de l'état antérieur de la technique.

Dans le mode de réalisation préféré de l'invention, les fenêtres $18_{sup(n)}$ sont toutes de mêmes dimensions prédéterminées. Par exemple, d'une façon analogue au critère déterminé choisi, les dimensions $D_{sup(n)}$ des fenêtres, calculées par exemple sous forme d'aires ou de dimensions exprimées dans les directions "SEL" et "ENG", peuvent correspondre à une fraction "γ" déterminée de la dimension D18 de la fenêtre 18 totale couvrant la totalité des positions P12$_F$ que sont susceptibles de couvrir les moyens de détection 12, 14 :

$$D_{sup(n)} = \gamma \ \times D18$$

Cette configuration permet d'effectuer la reconnaissance du passage du rapport sur une fenêtre de taille réduite.

Le procédé objet de l'invention propose ainsi une reconnaissance précise et rapide de la position P12$_F$ du levier.

**Revendications**

1. Procédé de gestion d'un calculateur d'une boîte de vitesses robotisée à actionneurs commandés en réponse au déplacement d'un levier mobile dans deux directions sensiblement perpendiculaires, comportant une étape initiale d'apprentissage des positions du levier au cours de laquelle le calculateur mémorise pour chaque rapport une information de position exprimée dans un repère à deux dimensions pour définir une zone de reconnaissance du rapport, **caractérisé en ce qu'**il comporte au moins une étape supplémentaire d'apprentissage des positions du levier, qui est déclenchée par la détection d'au moins un critère déterminé, au cours de laquelle le calculateur mémorise à nouveau, pour chaque rapport, une information (P12$_{sup(n)}$) représentative d'une nouvelle position du levier pour définir une nouvelle zone (RecoMAV1$_{SUP(n)}$) de reconnaissance dudit rapport qui correspond à une fenêtre ($18_{SUP(n)}$) dont la nouvelle position dans le repère est dépendante de la nouvelle position (P12$_{sup(n)}$) du levier.

2. Procédé selon la revendication précédente, **caractérisé en ce qu'**il comporte plusieurs étapes supplémentaires d'apprentissage de la position du levier.

3. Procédé selon la revendication précédente, **caractérisé en ce que** le critère déterminé qui déclenche chaque nouvelle étape d'apprentissage correspond à un écart ($\Delta$) déterminé, mesuré par les moyens (14, 16) de détection au cours des passages d'un rapport (MAV1), de la position du levier dans les deux directions (SEL, ENG).

4. Procédé selon la revendication précédente, **caractérisé en ce que** l'écart ($\Delta$) déterminé correspond à une fraction ($\alpha$) déterminée de la plage totale (f (XSEL1, YENG1)) de détection des positions (P12$_F$) du levier qui est couverte par les moyens (14, 16) de détection.

5. Procédé selon la revendication précédente, **caractérisé en ce que** la fraction ($\alpha$) déterminée est établie en fonction de paramètres d'usure de la boîte de vitesses.

6. Procédé selon la revendication précédente, **caractérisé en ce que** la fraction ($\alpha$) déterminée correspond à environ un millième de la plage totale f (XSEL1, YENG1)) de détection des positions (P12$_F$) du levier qui est couverte par les moyens (14, 16) de détection.

7. Procédé selon l'une quelconque des revendications précédentes, **caractérisé en ce que** la fenêtre ($18_{sup(n)}$) associée à chaque zone (RecoMAV1$_{sup(n)}$) de reconnaissance du passage d'un rapport (MAV1) est centrée sur la position (P12$_{sup(n)}$) du levier détectée lors de la dernière étape d'apprentissage effectuée.

8. Procédé selon l'une quelconque des revendications précédentes, **caractérisé en ce que** la fenêtre ($18_{sup(n)}$) associée à chaque zone de reconnaissance est de dimensions réduites et **en ce que** les fenêtres ($18_{sup(n)}$) sont toutes de mêmes dimensions prédéterminées.

9. Procédé selon la revendication précédente, **caractérisée en ce que** les dimensions ($D_{sup(n)}$) des fenêtres ($18_{sup(n)}$) correspondent à une fraction ($\gamma$) dé-

terminée de la dimension (D18) d'une fenêtre (18) totale couvrant la totalité des positions (P12$_F$) que sont susceptibles de couvrir les moyens (14, 16) de détection, pour proposer une reconnaissance précise et rapide de la position du levier.

## Claims

1. Management method for a computer of a semiautomatic gearbox with actuators which are controlled in response to the movement of a lever which can move in two generally perpendicular directions, comprising an initial step for programming the positions of the lever during which the computer memorizes for each gear a position signal expressed according to a two-dimensional reference system to define a zone of recognition of the gear, **characterized in that** it comprises at least one additional step for programming the positions of the lever, which is triggered by the detection of at least one specified criterion, during which the computer memorizes again, for each gear, a signal (P12$_{sup(n)}$) representing a new position of the lever to define a new zone (RecoMAV1$_{SUP(n)}$) of recognition of the said gear which corresponds to a window (18$_{SUP(n)}$) of which the new position according to the reference system is dependent on the new position (P12$_{sup(n)}$) of the lever.

2. Method according to the preceding claim, **characterized in that** it comprises several additional steps for programming the position of the lever.

3. Method according to the preceding claim, **characterized in that** the specified condition which triggers each new programming step corresponds to a specified difference ($\Delta$), measured by the means (14, 16) of detection during the selections of a gear (MAV1), in the position of the lever in both directions (SEL, ENG).

4. Method according to the preceding claim, **characterized in that** the specified difference ($\Delta$) corresponds to a specified fraction ($\alpha$) of the total range (f(XSEL1, YENG1)) of detection of the positions (P12$_F$) of the lever which is covered by the means (14, 16) of detection.

5. Method according to the preceding claim, **characterized in that** the specified fraction ($\alpha$) is determined on the basis of gearbox wear parameters.

6. Method according to the preceding claim, **characterized in that** the specified fraction ($\alpha$) corresponds to approximately one thousandth of the total range (f(XSEL1, YENG1)) of detection of the positions (P12$_F$) of the lever which is covered by the means (14, 16) of detection.

7. Method according to any one of the preceding claims, **characterized in that** the window (18$_{sup(n)}$) associated with each zone (RecoMAV1$_{sup(n)}$) of recognition of the selection of a gear (MAV1) is centred on the position (P12$_{sup(n)}$) of the lever detected at the time of the last programming step carried out.

8. Method according to any one of the preceding claims, **characterized in that** the window (18$_{sup(n)}$) associated with each zone of recognition has small dimensions and **in that** the windows (18$_{sup(n)}$) all have the same preset dimensions.

9. Method according to the preceding claim, **characterized in that** the dimensions (D$_{sup(n)}$) of the windows (18$_{sup(n)}$) correspond to a specified fraction ($\gamma$) of the dimension (D18) of a total window (18) covering all the positions (P12$_F$) that the means (14, 16) of detection can cover, to provide an accurate and rapid recognition of the position of the lever.

## Patentansprüche

1. Verfahren zur Verwaltung eines robotergesteuerten Getrieberechners mit Betätigungselementen, die als Antwort auf die Verschiebung eines in zwei im Wesentlichen senkrechte Richtungen beweglichen Hebels gesteuert werden, umfassend einen Anfangsschritt des Lernens der Positionen des Hebels, während dessen der Rechner für jeden Gang eine Positionsinformation speichert, die in einem zweidimensionalen Bezugspunkt ausgedrückt ist, um eine Erkennungszone des Gangs zu definieren, **dadurch gekennzeichnet, dass** es mindestens einen zusätzlichen Schritt des Lernens der Positionen des Hebels umfasst, der durch die Erfassung mindestens eines bestimmten Kriteriums ausgelöst wird, während dessen der Rechner wieder für jeden Gang eine Information (P12$_{sup(n)}$) speichert, die für eine neue Position des Hebels repräsentativ ist, um eine neue Erkennungszone (RecoMAV1$_{sup(n)}$) des Gangs zu definieren, die einem Fenster (18$_{sup(n)}$) entspricht, dessen neue Position in dem Bezugspunkt von der neuen Position (P12$_{sup(n)}$) des Hebels abhängt.

2. Verfahren nach dem vorhergehenden Anspruch, **dadurch gekennzeichnet, dass** es mehrere zusätzliche Schritte des Lernens der Position des Hebels umfasst.

3. Verfahren nach dem vorhergehenden Anspruch, **dadurch gekennzeichnet, dass** das bestimmte Kriterium, das jeden neuen Lernschritt auslöst, einer bestimmten Abweichung ($\Delta$) entspricht, die durch die Mittel (14, 16) zur Erfassung der Position des Hebels in beiden Richtungen (SEL, ENG) während der Gangwechsel (MAV1) gemessen wird.

4. Verfahren nach dem vorhergehenden Anspruch, **dadurch gekennzeichnet, dass** die bestimmte Abweichung ($\Delta$) einem bestimmten Bruchteil ($\alpha$) des Gesamterfassungsbereichs (f(XSEL1, YENG1)) der Positionen ($P12_F$) des Hebels, der durch die Erfassungsmittel (14, 16) abgedeckt ist, entspricht.

5. Verfahren nach dem vorhergehenden Anspruch, **dadurch gekennzeichnet, dass** der bestimmte Bruchteil ($\alpha$) in Abhängigkeit von Verschleißparametern des Getriebes erstellt wird.

6. Verfahren nach dem vorhergehenden Anspruch, **dadurch gekennzeichnet, dass** der bestimmte Bruchteil ($\alpha$) ungefähr einem Tausendstel des Gesamterfassungsbereichs (f(XSEL1, YENG1)) der Positionen ($P12_F$) des Hebels entspricht, der durch die Erfassungsmittel (14, 16) abgedeckt ist.

7. Verfahren nach einem der vorhergehenden Ansprüche, **dadurch gekennzeichnet, dass** das Fenster ($18_{sup(n)}$), das jeder Erkennungszone ($RecoMAV1_{sup(n)}$) des Gangwechsels (MAV1) zugeordnet ist, auf der Position ($P12_{sup(n)}$) des während des letzten durchgeführten Lernschrittes erfassten Hebels zentriert ist.

8. Verfahren nach einem der vorhergehenden Ansprüche, **dadurch gekennzeichnet, dass** das Fenster ($18_{sup(n)}$), das jeder Erkennungszone zugeordnet ist, verringerte Dimensionen aufweist, und dass die Fenster ($18_{sup(n)}$) alle dieselben vorbestimmten Dimensionen haben.

9. Verfahren nach dem vorhergehenden Anspruch, **dadurch gekennzeichnet, dass** die Dimensionen ($D_{sup(n)}$) der Fenster ($18_{sup(n)}$) einem bestimmten Bruchteil der Dimension (D18) eines Gesamtfensters (18) entsprechen, das die Gesamtheit der Positionen ($P12_F$) abdeckt, die die Erfassungsmittel (14, 16) abdecken können, um eine genaue und rasche Erkennung der Position des Hebels anzubieten.

P12$_{INI}$
RecoMAV1
P12$_F$
P12$_F$ — P12$_F$
18
MAV1
MAV3
10
RecoMAV3
RecoMAV5
MAV5
ENG
16
0
SEL
12
14
MAV2
MAV4
RecoPM
MAR
RecoMAV2
RecoMAV4
RecoMAR
PM

Fig. 1

RecoMAV1

RecoMAV1$_{SUP(2)}$
RecoMAV1$_{SUP(n)}$
18$_{SUP(2)}$
18$_{SUP(n)}$
RecoMAV1$_{SUP(n+1)}$
18
P12$_F$
P12$_{SUP(n+1)}$
18$_{SUP(n+1)}$
YENG1
18$_{SUP(1)}$
P12$_{SUP(n)}$
P12$_{SUP(2)}$
18$_{SUP(0)}$
P12$_F$
P12$_{SUP(0)}$
P12$_{SUP(1)}$
RecoMAV1$_{SUP(1)}$
RecoMAV1$_{SUP(0)}$
XSEL1

Fig. 2

**EP 1 217 263 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3836145 A